# NEUE EUROPÄISCHE PATENTSCHRIFT

(11) **EP 0 683 806 B2**
(45) Veröffentlichungstag und Bekanntmachung des Hinweises auf die Entscheidung über den Einspruch: **20.12.2006**
(45) Hinweis auf die Patenterteilung: 05.08.1998
(21) Anmeldenummer: 94904623.9
(22) Anmeldetag: 05.01.1994
(51) Int. Cl.: C08L 33/12, C08F 2/44

(54) **AUSHÄRTBARE GIESSMASSEN**
CURABLE MOULDING COMPOUNDS
MATIERES DE MOULAGE DURCISSABLES

(30) Priorität: 15.02.1993 DE 4304494
(43) Veröffentlichungstag der Anmeldung: 29.11.1995
(73) Patentinhaber: Blanco GmbH & Co. KG, 75038 Oberderdingen (DE)
(72) Erfinder: HARKE, Stefan, D-74889 Sinsheim-Rohrbach (DE); MAIER, Uwe, D-75045 Walzbachtal (DE); WILHELM, Thomas, D-75056 Sulzfeld (DE)
(74) Vertreter: Hoeger, Stellrecht & Partner Patentanwälte
(86) Internationale Anmeldenummer: PCT/EP1994/000009
(87) Internationale Veröffentlichungsnummer: WO 1994/018270

(56) Entgegenhaltungen:
- EP-A- 0 362 884
- EP-A- 0 491 170
- EP-A- 0 516 299
- WO-A-92/03497
- DE-C- 2 627 081
- GB-A- 1 493 393

## Beschreibung

Die Erfindung betrifft eine aushärtbare Gießmasse zur Herstellung von Kunststofformteilen mit einer flüssigen monomeren Acrylatkomponente.

Aushärtbare Gießmassen dieser Art sind aus einer Vielzahl von Druckschriften bekannt, beispielhaft sei hier nur auf das deutsche Patent P 24 49 696 und die europäischen Patentanmeldungen EP-A 0 491 170, EP-A 0 218 866, EP-A 0 361 101 und EP-A 0 321 193 verwiesen.

Gemeinsam ist all diesen aushärtbaren Gießmassen auf Acrylatbasis, daß wegen der geringen Viskosität von reinem Acrylatmonomerem viskositätserhöhende Komponenten in Form von teilpolymerisiertem Acrylat mit typischen Molekulargewichten von 50.000 bis 1.000.000 zugegeben werden.

Die am häufigsten verwendete Acrylatkomponente im Stand der Technik ist Methylmethacrylat aber genausogut können gemäß der vorliegenden Erfindung andere Acrylsäure- und Metacrylsäure-Ester mit aliphatischen, alizyklischen oder aromatischen Alkoholen zum Einsatz kommen, wie sie beispielsweise in der DE-P5 24 49 656 im einzelnen aufgezählt sind. Insgesamt wird vorwiegend Polymethylmethacrylat mit dem oben genannten Molekulargewichtsbereich zum Herstellen eines Sirups verwendet, der die Viskosität des reinen Methylmethacrylats von 0.5 mPas bei 20° C auf Werte zwischen 10 und 250 mPas bei Raumtemperatur einstellt. Die notwendigen Gewichtsanteile des Polymethylmethacrylats liegen ca. bei 5 bis 25 Gew.% des Sirups.

Ein Nachteil bei dieser Art der Eindickung der monomeren Komponente liegt darin, daß der Lösevorgang für das Polymethylmethacrylat im monomeren Methylmethacrylat selbst bei erhöhter Temperatur mehrere Stunden dauert und damit maßgeblich den Zeitbedarf für die Herstellung der Gießmasse bestimmt.

Problematisch bei den aushärtbaren Gießmassen ist stets das Absetzverhalten der in diesen Gießmassen enthaltenen anorganischen partikelförmigen Materialien, weshalb in der Vergangenheit große Anstrengungen untemommen worden sind, um die aushärtbaren Gießmassen als stabile Dispersionen herstellen zu können.

Als ein jüngeres Beispiel aus der Patentliteratur sei noch die Offenlegungsschrift der internationalen Patentanmeldung WO92/03497 genannt. Diese Druckschrift offenbart eine Dispersion von Polymethylmethacrylalpartikeln in MMA/ PMMA-Sirup. Es werden hier kein partikelförmiges anorganisches Material und keine Kunststoflpartikel aus mit anorganischen Füllstoffen gefüllten Polymeren zur Verwendung vorgeschlagen.

Aufgabe der Erfindung ist es eine Formulierung für eine Gießmasse und ein Verfahren zu ihrer Herstellung anzugeben, bei dem auf den zeitaufwendigen Schritt der Sirupherstellung verzichtet werden kann, während andererseits aber ein zu schnelles Absinken und Sedimentieren von anorganischen Partikeln zuverlässig verhindert werden kann.

Diese Aufgabe wird bei eineraushärtbaren Gießmasse der eingangs beschriebenen Art erfindungsgemäß dadurch gelöst, daß die aushärtbare Gießmasse neben eine flüssigen monomeren Acrylatkomponente, die von einem der Ester von Acrylsäure und/oder Methacrylsäure, wie oben beschrieben, gebildet sein kann, einen Anteil eines partikelförmigen Kunststoffmaterials sowie den Anteil eines partikelförmigen anorganischen Materials umfaßt, wobei der Gesamtgehalt aus partikelförmigem Kunststoffmaterial und anorganischem Material 45 bis 85 Gew.% der Gießmasse macht. Der Anteil des partikelförmigen Kunststoffmaterials sollte mindestens ca. 8 Gew.% der Gießmasse betragen, vorzugsweise zwischen 15 und 30 Gew.%. Gegebenenfalls wird der aushärtbaren Gießmasse noch ein Vernetzungsmittel zugegeben, wo dies im einzelnen Anwendungsfall für die mechanischen und thermischen Eigenschaften des herzustellenden Kunststofformteils notwendig ist. Der Anteil des Vernetzungsmittels beträgt bis zu 6 Gew.% des Anteils der monomeren Acrylat komponente.

Überraschenderweise hat sich herausgestellt, daß sich das monomere Acrylat oder Methacrylat bereits durch die Zugabe eines partikelförmigen Kunststoffmaterials soweit eindicken läßt, daß die Sedimentierung des weiter zugemischten Anteils eines partikelförmigen anorganischen Materials soweit reduziert ist, daß die Dispersion innerhalb einer üblichen Lagerzeit und Verarbeitungszeit stabil bleibt. Vorzugsweise wird die erfindungsgemäße Gießmasse gleich anschließend an den Herstellungsprozeß verwendet, bleibt aber auch noch mehr als 8 h verwendungsfähig.

Bei der Auswahl des partikelförmigen Kunststoffmaterials steht eine breite Palette von Materialien zur Verfügung, wobei jedoch im Hinblick auf die Wiederverwertbarkeit der Materialien bevorzugt auf ein partikelförmiges Kunststoffmaterial zurückgegriffen wird, welches selbst auf Acrylatbasis hergestellt ist. Dies hat darüberhinaus den Vorteil der problemlosen Benetzbarkeit der Kunststofimaterialpartikel durch die flüssige, monomere Akrylatkomponente.

Überraschenderweise läßt sich ein solcher Stabilisierungseffekt für die Suspension der anorganischen Materialpartikel in der Gießmasse ohne jeden Zusatz von PMMA-Anteilen erreichen, so daß vollständig auf den zeitaufwendigen Löseschritt des PMMA-Materials in monomerem Acrylat bzw. Methylacrylat verzichtet werden kann.

Die erfindungsgemäßen aushärtbaren Gießmassen sind im wesentlichen von gelösten PMMA-Anteilen frei. Dies bedeutet, daß insbesondere die monomere Acrylatkomponente im wesentlichen frei von PMMA-Anteilen ist, wenn dieser das partikelförmige organische und partikelförmige anorganische Material zugegeben wird.

Selbstverständlich kann sich später ein mehr oder weniger grosser Anteil an aus dem partikelförmigen Kunststoffmaterial herausgelösten PMMA-Anteilen ergeben, welcher jedoch nicht wesentlich zu der Viskositätserhöhung der Gießmasse und insbesondere nicht zur Anfangsstabilisierung der Dispersion beiträgt.

Überraschenderweise hat sich ferner gezeigt, daß das partikelförmige Kunststoffmaterial aus einem mit einem anorganischen Füllstoff gefüllten Polymermaterial hergestellt sein kann. Dies bedeutet, daß insbesondere Materialien, wie sie in dem deutschen Patent P 24 49 656 sowie den oben genannten europäischen Offenlegungsschriften zu entnehmen sind, in klein gemahlener Form, hier als partikelförmiges, insbesondere granulares, Kunststoffmaterial verwendbar ist, was ein breites Feld für die Verwendung von recycelten Kunststoffmaterialien, insbesondere auch aus recycelten Kunststoffspülen, Arbeitsplatten etc. eröffnet.

Selbstverständlich eignen sich auch erfindungsgemäß hergestellte Kunststofformteile und deren Produktionsabfälle als Ausgangsmaterial für die Herstellung der partikelförmigen Kunststoffmaterialien, die wieder in einer aushärtbaren Gießmasse entsprechend der Erfindung verwendet werden können.

Das gefüllte Polymer ist vorzugsweise ein mindestens teilweise vernetztes Acrylatpolymer, vorzugsweise ein PM-MA-Polymer.

Der anorganische Füllstoff des gefüllten Polymers kann ausgewählt werden aus der Reihe Cristobalit, Quarz, Aluminiumoxidtrihydrat, Calciumcarbonat, mineralische Silikate, insbesondere Glimmer, oder beliebige Mischungen aus den vorgenannten Materialien.

Der Anteil der anorganischen Füllstoffe an dem gefüllten Polymer beträgt zwischen 20 und 80 Gew.% des Polymers, und der Anteil der organischen Polymermatrix des gefüllten Polymers beträgt dementsprechend zwischen 20 und 80 Gew.%.

Die Korngröße des partikelförmigen Kunststoffmaterials beträgt typischerweise < 1 mm, und um ein Quellen der Kunststoffpartikel und damit das Entziehen von flüssigem monomeren Material aus der Gießmasse in akzeptablen Grenzen zu halten, sollte der mittlere Korndurchmesser mindestens 10 µm betragen. Wenn sehr kurze Lagerzeiten zwischen Herstellung der Gießmasse und Verarbeitung der Gießmasse eingehalten werden können, können selbstverständlich auch merkliche Anteile an feinen Kunststoffpartikeln in dem Kunststoffmaterial enthalten sein. Sollte bei etwas längerer Standzeit die Gießmasse aufgrund des Quelleffekts der Kunststoffmaterialpartikel zu hoch werden, läßt sich die Viskosität durch weitere Zugabe von monomerer Acrylatkomponente wieder in den bevorzugten Viskositätsbereich von 1 bis 5 Pas bringen, ohne daß Nachteile für die Gießmasse, deren Verarbeitbarkeit oder gar der daraus hergestellten Produkte resultieren. Das der Gießmasse zugesetzte partikelförmige anorganische Material weist bevorzugt eine mittlere Korngröße im Bereich von 10 µm bis 1 mm auf. Als partikelförmige anorganische Materialien eignen sich wiederum die Materialien der Reihe Cristobalit, Quarz, mineralische Silikate und/oder Aluminiumoxidtrihydrat oder aber auch Mischungen hieraus.

Bevorzugte Vernetzungsmittel sind polyfunktionelle Acrylatverbindungen, wobei hier insbesondere Ethylenglycoldimethacrylat und/oder Trimethylolpropantrimethacrylat Verwendung finden.

Das Vernetzungsmittel wird mit einem Anteil von bis zu 6 Gew.% des Anteils an monomerer Acrylatkomponente eingesetzt.

Das erfindungsgemäße Verfahren zur Herstellung einer zuvor beschriebenen Gießmasse umfaßt die Schritte:
a) Herstellen, insbesondere Mahlen, eines partikelförmigen Kunststoffmaterials, häufig unter Verwendung von zu recycelnden Kunststoffprodukten, einschließlich von gefüllten Kunststoffmaterialien; gegebenenfalls wird auf die gewünschte Korngröße abgesiebt;
b) Vorlegen einer flüssigen, monomeren Acrylatkomponente in einem Rührbehälter, welche gegebenenfalls ein Trennmittel und/oder einen geeigneten Vernetzer mit bis zu 6 Gew.% umfaßt;
c) Zugabe des gemäß Schritt a) hergestellten Kunststoffmaterials zu der monomeren Acrylatkomponente unter Rühren und unter nachfolgendem Rühren der Mischung während mindestens ca. 20 Minuten, wobei die Rührdauer u.a. von der Partikelgröße des verwendeten Kunststoffmaterials abhängt bzw von der Geschwindigkeit des Quellvorgangs dieser Kunststoffpartikel;
d) Zugabe der restlichen Bestandteile der Gießmasse, insbesondere des anorganischen Materials, und gegebenenfalls von Pigmenten, Katalysatoren, Beschleuniger etc. ebenfalls unter Rühren.

Vereinfachen läßt sich das vorgenannte Verfahren noch dadurch, daß die Materialien gemäß den Schritten c) und d) gemeinsam zu der flüssigen Acrylatkomponente zugegeben werden und daß anschließend wiederum für eine Mindestzeit von ca. 20 Minuten gerührt wird. Auch hier hängt, wie oben erwähnt, die Rührdauer von der vorgelegten Partikelgröße des Kunststoffmaterials ab.

Die erfindungsgemäß hergestellten Gießmassen werden dann im bekannten Gießverfahren weiterverarbeitet, d. h. über einen Einfüllkanal in einen Formenhohlraum eingefüllt und ausgehärtet. Die Kunststofformteile sind durch normale Pigmente beliebig einfärbbar und es lassen sich beispielsweise Graniteffekte etc. durch geeignete Wahl der Komponenten erzielen.

Je nach Führung des Polymerisationsprozesses sind hochglänzende Oberflächen genauso erhältlich wie matte. Matte Oberflächen werden bei niedriger Starttemperatur an der Sichtseite der verwendeten Formen erhalten, während glänzende Oberflächen bei hoher Starttemperatur erhalten werden.

Vorzugsweise wird die erfindungsgemäße Gießmasse zur Herstellung von Kunststofformteilen für den Küchen- und Sanitärbereich, insbesondere als Arbeitsplatten für Küchen, Küchenspülen, Badewannen, Duschtassen, Waschbecken oder dgl. eingesetzt.

Die organische Polymermatrix der Kunststoffpartikel besteht vorzugsweise aus vernetztem Polymethylmethacrylat. Als anorganischen Füllstoff können beispielsweise Cristobalit oder Quarz, Glas, Aluminiumtrihydrat, Calciumcarbonat, mineralische Silikate (z.B. Glimmer) oder ein Gemisch der genannten Füllstoffe enthalten sein. Die Partikel des Kunststoffmaterials haben typischerweise eine Korngröße < 1 mm.

Sie können hergestellt werden durch die Zerkleinerung geeigneter Polymermaterialien; es bietet sich beispielsweise an, hierzu Abfälle aus der Produktion von Formteilen auf Basis PMMA (vernetzt)/Füllstoff zu verwenden oder im Wege des Recyclings auf nicht mehr verwendungsfähige Formteile aus der erfindungsgemäßen Gießmasse zurückzugreifen.

Gibt man in reines MMA oder in eine Mischung aus MMA und einem geeigneten Vernetzer (z.B. Ethylenglykoldimethacrylat oder Trimethylolpropantrimethacrylat) anorganische Füllstoffe, wie z.B. Cristobalit, Quarz, Glas oder mineralische Silikate, so erhält man keine stabile Dispersion. Es kommt schnell zu einem Absetzen des Füllstoffs. Eine Herstellung homogener Formteile im Gießverfahren ist daher nicht möglich.

Überraschenderweise wurde gefunden, daß dann, wenn anstelle des reinen MMA bzw. der Mischung aus MMA und einem geeigneten Vernetzer eine erfindungsgemäß hergestellte Dispersion verwendet wird, das schnelle Absinken des Füllstoffs verhindert wird, und eine problemlos verwendbare Gießmasse erhalten wird. Die zur Herstellung der Dispersion verwendeten Kunststoffpartikel haben also eine bindemittelähnliche Wirkung und ermöglichen es, bei der Herstellung gießfähiger stabiler Dispersionen auf den zeitaufwendigen Schritt der Herstellung eines Sirups aus Methylmethacrylat und Polymethylmethacrylat zu verzichten.

### Beispiele

### Beispiel 1

10 kg eines Kunststoffmaterials (SILACRON 2000 der BLANCO GmbH & Co. KG) aus vernetztem Polymethylmethacrylat und Cristobalit werden gemahlen (mittlere Korngröße 100 - 200 µm) und anschließend unter Rühren in ein Gemisch aus 17 kg Methylmethacrylat, 0,125 kg Trennmittel (Stearinsäure) und 0,32 kg eines üblichen Vernetzungsmittels eingetragen. Nach 20minütigem Rühren werden 25 kg silanisiertes Cristobalitmehl (Korngröße O - 40 µm), 0,250 kg eines peroxidischen Katalysators und ca. 0,5 kg einer Pigmentpräparation eingetragen.

Die so erhaltene Gießmassen-Dispersion weist eine Viskosität bei 23° C von 1000 mPa*s auf und kann problemlos in die Gießform eingefüllt und auspolymerisiert werden. Nach weiteren 30 Minuten ist die Viskosität der verbliebenen Dispersion auf 4000 mPa*s angestiegen, eine problemlose Verarbeitbarkeit ist jedoch nach wie vor gegeben.

### Beispiel 2

8 kg eines Kunststoffmaterials (SILACRON 2000 der BLANCO GmbH & Co. KG) aus vernetztem Polymethylmethacrylat und Cristobalit werden gemahlen (mittlere Korngröße 200 - 300 µm) und anschließend unter Rühren in ein Gemisch aus 10 kg Methylmethacrylat, 0,125 kg Trennmittel (Stearinsäure) und 0,20 kg eines üblichen Vernetzungsmittels eingetragen. Gleichzeitig werden 10 kg silanisiertes Cristobalitmehl (Korngröße 0-40 µm) und 4 kg Quarzsand (Korngröße < 1 mm) zugegeben. Nach 20minütigem Rühren werden 0,17 kg eines peroxidischen Katalysators und ca. 0,2 kg einer Pigmentpräparation eingetragen.

Die so erhaltene Gießmassen-Dispersion weist eine Viskosität bei 23° C von 1300 mPa*s auf und kann problemlos in die Gießform eingefüllt und auspolymerisiert werden. Nach weiteren 30 Minuten ist die Viskosität der verbliebenen Dispersion auf 5000 mPa*s angestiegen, eine problemlose Verarbeitbarkeit ist nach wie vor gegeben.

### Vergleichsbeispiel 1

In 10 kg Methylmethacrylat werden 2,2 kg Polymethylmethacrylatgranulat (mittlere Korngröße ca. 500 µm) (Molekulargewicht Mw=150 000) unter Rühren eingetragen. Das so erhaltene Gemisch muß bis zurvollständigen Lösung des Polymethylmethacrylats bei erhöhter Temperatur gerührt werden. Der Lösevorgang ist nach ca. 8 bis 10 h (je nach verwendeter Temperatur) abgeschlossen. In den so hergestellten Sirup werden unter Rühren 0,20 kg eines üblichen Vernetzungsmittels, 16 kg silanisiertes Cristobalitmehl (Korngröße 0 - 40 µm), 0,125 kg Trennmittel (Stearinsäure) 0,16 kg eines peroxidischen Katalysators und ca. 0,5 kg einer Pigmentpräparation eingetragen.

Die so erhaltene Dispersion weist eine Viskosität bei 23° C von 1000 mPa·s auf und kann problemlos in die Gießform eingefüllt und auspolymerisiert werden.

### Vergleichsbeispiel 2

In 13 kg Methylmethacrylat werden unter Rühren 0,20 kg eines üblichen Vemetzungsmittels, 16 kg silanisiertes Cristobalitmehl (Korngröße 0 - 40 µm), 0,125 kg Trennmittel (Stearinsäure), 0,16 kg eines peroxidischen Katalysators und ca. 0,5 kg einer Pigmentpräparation eingetragen.

Es kommt zu einer zügigen Absetzung des Füllstoffs. Eine stabile Dispersion wird nicht erhalten.

Im folgenden werden die ungefähren Zeiten zur Herstellung einer gießfähigen Dispersion für die o.a. Beispiele zusammengefaßt:

| | | | | |
|---|---|---|---|---|
| | Beispiel 1 | Beispiel 2 | Vergleichsbeispiel | Vergleichsbeispiel 2 |
| t (min) | 35 min | 40 min | 500 min | *) |

| | | | | |
|---|---|---|---|---|
| *) Eine gießfähige Dispersion war nicht zu erhalten. | | | | |

## Patentansprüche

1. Aushärtbare Gießmasse zur Herstellung von Kunststofformteilen mit einer flüssigen monomeren Acrylatkomponente, einem Anteil eines partikelförmigen Kunststoffmaterials, einem Anteil eines partikelförmigen anorganischen Materials, wobei der Gesamtgehalt aus partikelförmigem Kunststoffmaterial und partikelförmigem anorganischen Material 45 bis 85 Gew.%, vorzugsweise 60 bis 70 Gew.%,' der Gießmasse beträgt, bei einem Mindestgehalt von 8 Gew.% des partikelförmigen Kunststoffmaterials, und wobei die flüssige monomere Acrylatkomponente im wesentlichen frei von vorpolymerisierter Acrylatkomponente; insbesondere PMMA-Anteilen ist, und ggf. mit einem Vernetzungsmittell, wobei der Anteil des Vernetzungsmitteln bis zu 6 Gew % des Anteils an der monomeren Acrylat-Komponente beträgt.

2. GieBmasse nach Anspruch 1, **dadurch gekennzeichnet, daß** das partikelförmige Kunststoffmaterial aus einem mit einem anorganischen Füllstoff gefüllten Polymer hergestellt ist.

3. Gießmasse nach Anspruch 2, **dadurch gekennzeichnet, daß** das gefüllte Polymer ein mindestens teilweise vernetztes Acrylatpolymer ist.

4. GieBmasse nach Anspruch 2 oder 3, **dadurch gekennzeichnet, daß** der anorganische Füllstoff Anteile von Cristobalit, Quarz, Aluminiumoxidtrihydrat, Calciumcarbonat, mineralischen Silikaten, insbesondere Glimmer oder beliebige Mischungen der vorgenannten Materialien umfaßt.

5. Gießmasse nach einem der Ansprüche 2 bis 4, **dadurch gekennzeichnet, daß** der Polymeranteil des Kunststoffmaterials 20 bis 80 Gew.%, und der Füllstoffanteil 80 bis 20 Gew.% beträgt.

6. Gießmasse nach einem der Ansprüche 1 bis 5, **dadurch gekennzeichnet, daß** die mittlere Korngröße des anorganischen Füllstoffs von 1 µm bis 1 mm beträgt, bevorzugt 10 µm bis 1 mm.

7. Gießmasse nach einem der Ansprüche 1 bis 6, **dadurch gekennzeichnet, daß** die mittlere Korngröße des partikelförmigen anorganischen Materials von 1 µm bis 1 mm beträgt, bevorzugt 10 µm bis 1 mm.

8. Gießmässe nach einem der Ansprüche 1 bis 7, **dadurch gekennzeichnet, daß** das partikelförmige anorganische Material Cristobalit, Quarz, Glas, mineralische Silikate, Calciumcarbonat, Bariumsulfat und/oder Aluminiumtrihydroxid umfaßt.

9. Gießmasse nach einem der Ansprüche 1 bis 8, **dadurch gekennzeichnet, daß** die Korngröße des partikelförmigen Kunststoffmaterials von 1 µm bis 1 mm beträgt, bevorzugt 10 µm bis 1 mm.

10. Gießmasse nach einem der Ansprüche 1 bis 9, **dadurch gekennzeichnet, daß** als Vernetzungsmittel polyfunktionelle Acrylatverbindungen, insbesondere Ethylenglykoldimethacrylat und/oder Trimethylolpropantrimethacrylat erithalten sind.

11. Verfahren zur Herstellung einer Gießmasse nach einem der Ansprüche 1 bis 10 mit den Schritten:
a) Herstellen eines partikelförmigen Kunststoffmaterials;
b) Vorlegen einer flüssigen monomeren Acrylatkomponente in einem Rührbehälter, welche gegebenenfalls ein Vernetzungsmittel und/oder ein Trennmittel umfaßt;
c) Zugabe des gemäß Schritt a) hergestellten Kunststoffmaterials zu der monomeren Acrylatkomponente unter Rühren und weiterem nachfolgenden Rühren der Mischung während mindestens ca. 20 Minuten;
d) Zugabe der restlichen Bestandteile der Gießmasse, insbesondere des anorganischen Materials und gegebenenfalls von Pigmenten, Katalysatoren, Beschleunigern etc. unter Rühren.

12. Verfahren nach Anspruch 11, **dadurch gekennzeichnet, daß** die Materialien von Schritt c) und d) gemeinsam zu der Acrylatkomponente zugegeben werden und daß anschließend während mindestens ca. 20 Minuten gerührt wird.

13. Verwendung der Gießmasse nach einem der Ansprüche 1 bis 10 zur Herstellung von Kunststofformteilen für den Küchen- oder Sanitärbereich, insbesondere Arbeitsplatten für Küchen, Badewannen, Duschtassen, Waschbecken oder dgl.

14. Kunststofformteile hergestellt unter Verwendung einer Gießmasse gemäß einem oder mehrerer Ansprüche der Ansprüche 1 bis 10.

## Claims

1. Curable casting composition for producing plastic moulded articles with a liquid, monomeric acrylate component, a proportion of a particulate plastic material, a proportion of a particulate inorganic material, the total content of particulate plastic material and particulate inorganic material being 45 to 85 % by weight, preferably 60 to 70 % by weight, of the casting composition, with a minimum content of 8 % by weight of particulate plastic material, and the liquid, monomeric acrylate component being essentially free from a prepolymerized acrylate component, in particular, PMMA proportions, and, optionally, with a cross-linker, the proportion of the cross-linker being up to 6 % by weight of the proportion of the monomeric acrylate component.

2. Casting composition as defined in claim 1, **characterized in that** the particulate plastic material is made from a polymer filled with an inorganic filler.

3. Casting composition as defined in claim 2, **characterized in that** the filled polymer is an at least partly cross-linked acrylate polymer.

4. Casting composition as defined in claim 2 or 3, **characterized in that** the inorganic filler comprises proportions of cristobalite, quartz, aluminium oxide trihydrate, calcium carbonate, mineral silicates, in particular, mica or any mixtures of the aforementioned materials.

5. Casting composition as defined in one of claims 2 to 4, **characterized in that** the polymer proportion of the plastic material is 20 to 80 % by weight, and the filler proportion is 80 to 20 % by weight.

6. Casting composition as defined in one of claims 1 to 5, **characterized in that** the average particle size of the inorganic filler is from 1 µm to 1 mm, preferably 10 µm to 1 mm.

7. Casting composition as defined in one of claims 1 to 6, **characterized in that** the average particle size of the particulate inorganic material is from 1 µm to 1 mm, preferably 10 µm to 1 mm.

8. Casting composition as defined in one of claims 1 to 7, **characterized in that** the particulate inorganic material comprises cristobalite, quartz, glass, mineral silicates, calcium carbonate, barium sulphate and/or aluminium trihydroxide.

9. Casting composition as defined in one of claims 1 to 8, **characterized in that** the particle size of the particulate plastic material is from 1 µm to 1 mm, preferably 10 µm to 1 mm.

10. Casting composition as defined in one of claims 1 to 9, **characterized in that** polyfunctional acrylate compounds, in particular, ethylene glycol dimethacrylate and/or trimethylolpropane trimethacrylate are contained therein as cross-linkers.

11. Process for producing a casting composition as defined in one of claims 1 to 10 comprising the steps:
a) producing a particulate plastic material;
b) first introducing into a mixing tank a liquid, monomeric acrylate component which optionally comprises a cross-linker and/or a mould release agent;
c) adding and stirring the plastic material produced in accordance with step a) into the monomeric acrylate component, and subsequently further stirring the mixture for at least approximately 20 minutes;
d) adding and stirring the remaining constituents of the casting composition, in particular, the inorganic material and, optionally, pigments, catalysts, accelerators, etc.

12. Process as defined in claim 11, **characterized in that** the materials of steps c) and d) are added jointly to the acrylate component, and that stirring is carried out subsequently for at least approximately 20 minutes.

13. Use of the casting composition as defined in one of claims 1 to 10 for the production of plastic moulded articles for kitchens or bathrooms, in particular, counter-tops for kitchens, bathtubs, shower troughs, wash-basins or the like.

14. Plastic moulded articles produced using a casting composition according to one or several claims of claims 1 to 10.

## Revendications

1. Matière moulable durcissable pour la préparation de pièces moulées en matière plastique avec un composant acrylate monomère liquide, une partie d'une matière plastique particulaire, une partie d'un matériau inorganique particulaire, dans laquelle la teneur globale en matière plastique particulaire et en matériau inorganique particulaire représente 45 à 85% en poids, de préférence 60 à 70% en poids de la matière moulable, pour une teneur minimum de 8% en poids de matière plastique particulaire, et dans laquelle le composant acrylate monomère liquide est essentiellement exempt de composants acrylate pré-polymérisés, en particulier de parties de PMMA, et éventuellement avec un agent réticulant, dans laquelle la proportion d'agent de réticulation s'élève au maximum à 6 % en poids de la partie de composant acrylate monomère.

2. Matière moulable selon la revendication 1, **caractérisée en ce que**, la matière plastique particulaire est préparée à partir d'un polymère chargé avec une charge inorganique.

3. Matière moulable selon la revendication 2, **caractérisée en ce que** le polymère chargé est un polymère acrylate au moins partiellement réticulé.

4. Matière moulable selon la revendication 2 ou 3, **caractérisée en ce que** la charge inorganique contient des parties de cristobalite, de quartz, d'oxyde d'aluminium trihydraté, de carbonate de calcium, de silicates minéraux, en particulier de mica, ou de mélanges quelconques des matériaux précités.

5. Matière moulable selon l'une des revendications 2 à 4, **caractérisée en ce que** la teneur en polymère de la matière plastique est de 20 à 80% en poids, et de la partie de type charge de 80 à 20% en poids.

6. Matière moulable selon les revendications 1 à 5, **caractérisée en ce que** la granulométrie moyenne de la charge inorganique est de 1 µm à 1 mm, de préférence de 10 µm à 1 mm.

7. Matière moulable selon l'une des revendications 1 à 6, **caractérisée en ce que** la granulométrie moyenne du matériau inorganique particulaire est de 1 µm à 1 mm, de préférence de 10 µm à 1 mm.

8. Matière moulable selon l'une des revendications 1 à 7, **caractérisée en ce que** le matériau inorganique particulaire contient de la cristobalite, du quartz, du verre, des silicates minéraux, du carbonate de calcium, du sulfate de baryum et/ou du trihydroxyde d'aluminium.

9. Matière moulable selon l'une des revendications 1 à 8, **caractérisée en ce que** la granulométrie de la matière plastique particulaire est de 1 µm à 1 mm, de préférence de 10 µm à 1 mm.

10. Matière moulable selon l'une des revendications 1 à 9, **caractérisée en ce qu'**elle contient comme agent réticulant des composés acrylate polyfonctionnels, en particulier du diméthacrylate d'éthylèneglycol et/ou du triméthacrylate de triméthylolpropane.

11. Procédé de préparation d'une matière moulable selon l'une des revendications 1 à 10 avec les étapes consistant à :
a) préparer une matière plastique particulaire;
b) disposer dans un récipient agité un composant acrylate liquide monomère, qui comprend éventuellement un agent réticulant et/ou un agent de démoulage;
c) ajouter sous agitation la matière plastique préparée conformément à l'étape a) au composant acrylate monomère et poursuivre l'agitation du mélange pendant au moins environ 20 minutes;
d) ajouter les constituants restants de la matière moulable, en particulier le matériau inorganique, et éventuellement des pigments, des catalyseurs, des accélérateurs etc., sous agitation.

12. Procédé selon la revendication 11, **caractérisé en ce que**, les matières des étapes c) et d) sont ajoutées ensemble au composant acrylate et **en ce que** le mélange est agité ensuite pendant au moins environ 20 minutes.

13. Utilisation de la matière moulable selon l'une des revendications 1 à 10 à la fabrication de pièces moulées en matière plastique pour le domaine de la cuisine ou du sanitaire, en particulier de plans de travail pour cuisines, de baignoires, de bacs à douche, de lavabos ou analogues.

14. Pièces moulées en matière plastique fabriquées en utilisant une matière moulable selon une ou plusieurs revendications des revendications 1 à 10.
